# FASCICULE DE BREVET EUROPEEN

(11) **EP 4 166 881 B1**
(45) Date de publication et mention de la délivrance du brevet: **14.02.2024**
(21) Numéro de dépôt: 22200600.9
(22) Date de dépôt: 10.10.2022
(51) Int. Cl.: F28D 15/02, F28D 15/04, B33Y 10/00, B33Y 80/00

(54) **MODULE POUR LA FABRICATION D'UN CALODUC A POMPE CAPILLAIRE A RAINURES RÉENTRANTES**
MODUL ZUR HERSTELLUNG EINES WÄRMEROHRS MIT KAPILLARPUMPE MIT WIEDEREINTRITTSNUTEN
MODULE FOR MANUFACTURING A HEAT PIPE WITH A CAPILLARY PUMP WITH RE-ENTRANT GROOVES

(30) Priorité: 18.10.2021 FR 2111049
(43) Date de publication de la demande: 19.04.2023
(73) Titulaire: Commissariat à l'énergie atomique et aux énergies alternatives, 75015 Paris (FR)
(72) Inventeur: MARIOTTO, Mathieu, 38054 GRENOBLE CEDEX 09 (FR); CHAMPEL, Bénédicte, 38054 GRENOBLE CEDEX 09 (FR); GRUSS, Jean-Antoine, 38170 SEYSSINET (FR)
(74) Mandataire: Brevalex

(56) Documents cités:
- FR-A1- 3 080 172
- US-A1- 2021 116 184
- US-B1- 7 848 624

## Description

### DOMAINE TECHNIQUE ET ÉTAT DE LA TECHNIQUE ANTÉRIEURE

La présente invention se rapporte à un module pour fabriquer un caloduc, en particulier un caloduc à pompage capillaire à rainures réentrantes.

L'invention appartient au domaine des dispositifs d'échange thermique, en particulier des caloducs, plus particulièrement des caloducs à pompage capillaire.

Un caloduc comporte une enceinte hermétiquement close, un fluide de travail et un réseau capillaire. Lors de la fabrication, tout l'air présent dans le tube caloduc est évacué et on introduit une quantité de liquide permettant de saturer le réseau capillaire. Il y a alors établissement d'un équilibre entre la phase liquide et la phase vapeur.

Sous l'effet d'une source chaude appliquée à l'une des extrémités, désignée évaporateur, le liquide se vaporise en induisant une légère surpression qui provoque le mouvement de la vapeur vers la seconde extrémité, désignée condenseur. Au condenseur, la vapeur se condense et repasse en phase liquide. Le fluide condensé circule dans le réseau capillaire et revient vers l'évaporateur sous l'effet de forces capillaires. Le retour du fluide liquide de la zone condenseur à la zone évaporateur est obtenu par pompage capillaire.

Les caloducs à rainures fonctionnent sur le principe du pompage capillaire. Ils comportent un tube, dans lequel la surface intérieure comporte des rainures longitudinales ou légèrement en forme de spirale. Les caloducs à rainures comportent un coeur vapeur et un réseau capillaire dans lequel circule le liquide. Du fait d'une variation de courbure de l'interface vapeur-liquide ente la zone condenseur et la zone évaporateur, un gradient de pression apparaît dans la phase liquide depuis la zone condenseur vers la zone évaporateur, qui mène à une variation de pression capillaire. Plus la largeur des rainures est petite, plus l'effet de pompage capillaire est important.

Par ailleurs, des rainures profondes permettent d'obtenir une section de passage pour le retour liquide grande, et donc de minimiser la perte de pression.

La puissance maximale que peuvent transporter des caloducs à rainures est généralement fixée par la limite capillaire dont le terme moteur est la pression capillaire, et le terme limitant essentiellement la perte de pression liquide dans les rainures.

Les caloducs à rainures réentrantes sont des exemples particuliers de caloducs à rainures dans lesquels la section des rainures présente deux parties distinctes : une partie large permettant un écoulement liquide en limitant les pertes de charge, et une partie étroite à l'interface liquide/vapeur, ce qui permet d'augmenter l'effet de pompage capillaire. Ces caloducs sont utilisés principalement dans le domaine spatial, par exemple pour la régulation thermique dans les satellites et/ou les engins spatiaux.

Le document EP 3 553 445 décrit un caloduc à rainures réentrantes comportant un empilement de plaques solidarisées via un procédé d'assemblage par brasure sous vide. La largeur et la profondeur des rainures peuvent alors aisément être fixées lors de la structuration des plaques. Ce caloduc offre alors un fonctionnement amélioré par rapport aux caloducs à rainures réentrantes de l'état de la technique, fabriqués avec des procédés d'extrusion de profils d'aluminium.

Ce caloduc présente un fonctionnement satisfaisant, cependant sa fabrication peut être complexe et longue. En outre, l'empilement de plaques limite la longueur du caloduc réalisable, notamment compte-tenu de la nécessité d'avoir à disposition un four de brasure sous vide de grandes dimensions pour la solidarisation des plaques.

Les méthodes de fabrication additive, telles que le procédé de fusion sur lit de poudre, permettent de réaliser des caloducs avec les dimensions des rainures satisfaisantes. Mais de telles méthodes ne permettent pas non plus, de fabriquer des caloducs à rainures réentrantes de grandes dimensions.

### EXPOSÉ DE L'INVENTION

C'est par conséquent un but de la présente invention d'offrir des moyens pour réaliser un caloduc à rainures réentrantes offrant un fonctionnement amélioré et de grandes dimensions, par exemple de l'ordre de 1 mètre à plusieurs mètres.

Le but énoncé ci-dessus est atteint par un module élémentaire de caloduc à rainures réentrantes obtenu par une méthode de fabrication additive, comportant une portion de canal vapeur et des portions de canaux liquides reliées à la portion de canal vapeur par des canaux de liaison, au moins la portion de canal vapeur et les portions de canaux liquides débouchant dans une ou les deux faces d'extrémité.

Les inventeurs ont pensé à associer la méthode de fabrication additive, qui permet d'obtenir les dimensions souhaitées, notamment pour les canaux de liaison, et une réalisation en modules à assembler. Ainsi des caloducs à pompage capillaire à rainures réentrantes performants et de grande longueur peuvent être réalisés.

Les conditions d'étanchéité et de tenue en pression imposées pour le fonctionnement des caloducs n'incitent pas naturellement à réaliser des caloducs en assemblant des modules.

De manière préférée, lorsque les portions de canaux de liaison débouchent dans au moins une face d'extrémité, ladite face comporte des moyens d'alignement avec une autre face d'extrémité d'un autre module élémentaire dans laquelle débouchent des portions de canaux de liaison, permettant d'assurer la continuité fluidique entre les deux modules élémentaires, et évitant qu'une distance entre les extrémités de deux portions de canal de liaison soit suffisamment grande pour provoquer le désamorçage du caloduc.

Les modules peuvent être assemblés par soudage et/ou, collage et/ou par des moyens mécaniques, tels que le bridage.

L'invention présente l'avantage de pouvoir réaliser des caloducs ayant des architectures complexes offrant de très bonnes performances, par exemple avec une extrémité reliée à une source froide et plusieurs extrémités reliées une source chaude. Le caloduc a par exemple une forme de croix. Au contraire, la réalisation de tels caloducs avec les procédés de l'état de la technique consiste à empiler des caloducs et à les souder les uns aux autres. La résistance thermique d'un tel assemblage de deux caloducs est la somme des résistances radiales des deux caloducs et de la résistance de contact entre les deux caloducs, ce qui réduit sensiblement ses performances.

La fabrication par méthode additive permet de réaliser des caloducs de forme complexe, par exemple en forme d'hélice ou de portion d'hélice, ce qui permet de réaliser des systèmes performants même lorsque les sources chaude et froide sont dans des plans différents.

L'invention a donc pour objet, selon l'un de ses aspects, un module élémentaire pour la fabrication d'un caloduc à pompage capillaire à rainures réentrantes, ledit module élémentaire étant configuré pour être assemblé de manière étanche à au moins un autre module élémentaire afin de former un caloduc à pompage capillaire à rainures réentrantes, ledit module comportant un corps réalisé par fabrication additive, ledit corps comprenant au moins deux faces d'extrémité, ledit corps comprenant une portion du canal vapeur du caloduc, une portion des canaux liquide du caloduc et une portion des canaux de liaison reliant la portion du canal vapeur et les portions de canaux liquide, lesdites portions de canal vapeur et de canaux liquides débouchant dans au moins l'une des faces d'extrémité, au moins par laquelle ledit module élémentaire est destiné à se raccorder à un autre module élémentaire.

La portion de canaux de liaison peut déboucher dans ladite face d'extrémité et ledit module peut comporter des moyens d'alignement de la portion de canaux de liaison débouchant dans ladite face d'extrémité avec la portion de canaux de liaison de l'autre module.

De plus, lesdits moyens d'alignement peuvent coopérer avec des moyens d'alignement portés par une face d'extrémité de l'autre module.

Les moyens d'alignement peuvent comporter des éléments en saillie ou en retrait de ladite face d'extrémité destinés à coopérer avec des éléments en retrait ou en saillie respectivement de la face d'extrémité de l'autre module.

Ladite face d'extrémité et l'autre face d'extrémité peuvent être dans des plans sécants.

En outre, les portions de canal vapeur et de canaux liquides au niveau d'une face d'extrémité peuvent s'étendre dans des plans distincts respectivement des plans dans lesquelles s'étendent les portions de canal vapeur et de canaux liquides au niveau de l'autre face d'extrémité.

La portion de canal vapeur peut avoir une section circulaire et le module peut avoir une section extérieure polygonale ou circulaire.

Par ailleurs, le corps du caloduc peut être en aluminium, cuivre, nickel, acier, ou en alliages de deux ou plusieurs de ces métaux.

La au moins première face d'extrémité peut être bordée par une bride d'assemblage.

Les portions de canaux peuvent déboucher dans ladite face d'extrémité et dans l'autre face d'extrémité.

De plus, les portions de canaux peuvent déboucher uniquement dans ladite face d'extrémité, le module étant destiné à former une extrémité du caloduc pour former un condenseur ou un évaporateur.

En outre, ledit corps peut comporter n faces d'extrémité, n étant au moins égal à 3, ledit module étant destiné à être connecté à d'autres modules élémentaires par ses n faces d'extrémité, dans lequel une portion de canal vapeur du caloduc, une portion des canaux liquide du caloduc et une portion des canaux de liaison débouchent dans chacune des n faces d'extrémité.

Le corps peut comporter une zone d'intersection des canaux à l'intersection des portions de canaux vapeur, des portions des canaux liquide et des portions des canaux de liaison et les portions de canaux de liaison peuvent être conformés de sorte que la largeur à l'intersection de deux portions de canaux de liaisons soit inférieure ou égale à la largeur d'une portion de canal de liaison.

L'invention a en outre pour objet, selon un autre de ses aspects, un caloduc comportant deux modules élémentaires, dans lesquels les portions de canaux peuvent déboucher uniquement dans ladite face d'extrémité, le module étant destiné à former une extrémité du caloduc pour former un condenseur ou un évaporateur, et p modules élémentaires différents, tels que définis précédemment, p étant un entier supérieur ou égal à 0, un lesdits modules étant connectés les uns aux autres par soudage, ledit caloduc étant rempli d'un fluide.

En outre, le caloduc peut comporter un ou plusieurs modules formant condenseur et un ou plusieurs modules formant évaporateur.

Par ailleurs, l'invention a aussi pour objet, selon un autre de ses aspects, un procédé de fabrication d'un caloduc tel que défini précédemment, comportant :
- la fabrication par méthode additive des modules élémentaires, dans lesquels les portions de canaux peuvent déboucher uniquement dans ladite face d'extrémité, le module étant destiné à former une extrémité du caloduc pour former un condenseur ou un évaporateur,
- la fabrication par méthode additive des p modules élémentaires différents, tels que définis précédemment,
- l'assemblage des modules,
- le remplissage du caloduc,
- la fermeture étanche du caloduc.

La fabrication additive peut être réalisée par fusion additive sur lit de poudre au moyen d'un faisceau laser.

Le procédé peut comporter une ou plusieurs étapes de traitement de surface préalables à l'assemblage des modules élémentaires.

En outre, lors de la fabrication les dimensions des modules élémentaires peuvent être telles que ce sont les brides d'assemblage qui entrent en contact et un jeu peut être prévu entre les extrémités des portions de canaux vapeurs, des extrémités des portions de canaux liquides et des portions de canaux de liaison, ce jeu étant inférieur à la largeur de canal de liaison fixée lors de la conception du caloduc.

Le module élémentaire, le caloduc et le procédé selon l'invention peuvent comporter l'une quelconque des caractéristiques précédemment énoncées, prises isolément ou selon toutes combinaisons techniquement possibles avec d'autres caractéristiques.

### BRÈVE DESCRIPTION DES DESSINS

La présente invention sera mieux comprise sur la base de la description qui va suivre et des dessins en annexe sur lesquels:
La figure 1 est une vue en perspective d'une extrémité d'un module élémentaire d'un caloduc à rainures réentrantes selon un exemple de l'invention,
La figure 2 est une vue en perspective d'une autre extrémité du module élémentaire de la figure 1,
La figure 3 est une vue en perspective de deux extrémités assemblées de deux modules des figures 1 et 2,
La figure 4 est une vue en coupe selon le plan AA du module élémentaire de la figure 3,
La figure 5 est une vue en perspective d'un module élémentaire d'un caloduc à rainures réentrantes selon un exemple de l'invention destiné à former une extrémité d'un caloduc, avec un orifice de remplissage dit queusot,
La figure 6 est une représentation schématique d'un exemple de caloduc qui peut être obtenu avec les modules élémentaires des figures 1, 2, 3 et 4,
La figure 7 est une représentation schématique d'un exemple de caloduc qui peut être obtenu avec les modules élémentaires des figures 1, 2, 3 et 4 et d'un module élémentaire à deux coudes selon un autre exemple de réalisation,
La figure 8 est une vue en perspective dont une partie est représentée en transparence d'un module élémentaire d'un caloduc à rainures réentrantes selon un exemple de l'invention présentant une forme cintrée,
La figure 9A est une vue en perspective d'une extrémité d'un module élémentaire d'un caloduc à rainures réentrantes selon un autre exemple de l'invention,
La figure 9B est une vue en coupe selon le plan BB du module élémentaire de la figure 9A et d'une extrémité d'un module élémentaire complémentaire,
La figure 10 est une représentation schématique d'un autre exemple de caloduc qui peut être obtenu avec les modules élémentaires selon l'invention,
La figure 11A est une vue en perspective d'un module élémentaire en T mis en oeuvre dans le caloduc de la figure 10,
La figure 11B est une vue en coupe selon le plan CC du module élémentaire de la figure 11A,
La figure 11C représente des vues agrandies de la figure 11B,
La figure 12 est une représentation schématique d'un autre exemple de caloduc qui peut être obtenu avec les modules élémentaires selon l'invention,
La figure 13 est vue en perspective d'un autre exemple de module élémentaire selon l'invention,
La figure 14 est une vue similaire à celle de la figure 13 pour laquelle l'une des faces du caloduc a été retirée,
La figure 15 est vue en perspective d'un autre exemple de module élémentaire selon l'invention,
La figure 16A est une vue en coupe transversale d'un autre exemple de module élémentaire selon l'invention,
La figure 16B est une vue en coupe selon le plan BB du module de la figure 16A,
La figure 17 est une vue en coupe transversale d'un autre exemple de module élémentaire selon l'invention, et
La figure 18 est une vue en perspective d'un autre exemple de module élémentaire selon l'invention sur laquelle est indiqué un sens préféré de croissance de l'épaisseur du module lors de la fabrication par fabrication additive.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### DESCRIPTION DES MODES DE RÉALISATION

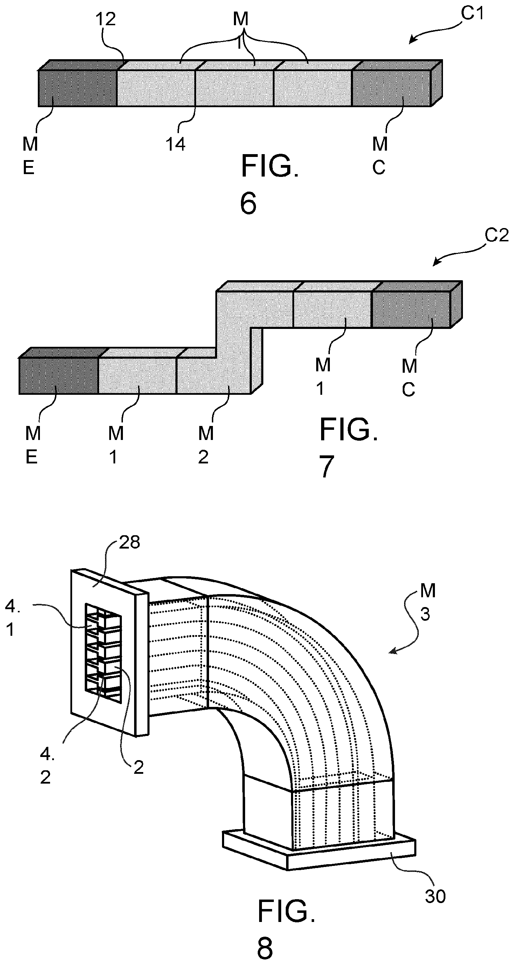

Sur la figure 6, on peut voir un exemple de caloduc à rainures réentrantes obtenu par assemblage des modules élémentaires selon l'invention.

Le caloduc C1 comporte cinq modules solidarisés les uns aux autres. Dans cet exemple, le caloduc C1 comporte un module MC formant l'extrémité de caloduc et destiné à former le condenseur, un module ME formant l'extrémité de caloduc et destiné à former évaporateur et trois modules élémentaires M1 formant la zone adiabatique.

Les modules ME, MC, et M1 sont formés par fabrication additive à partir d'un matériau conducteur thermique, de préférence un métal ou un alliage métallique.

La fabrication additive peut être la fusion sur lit de poudre. D'autres méthodes de fabrication additive seront décrites ci-dessous.

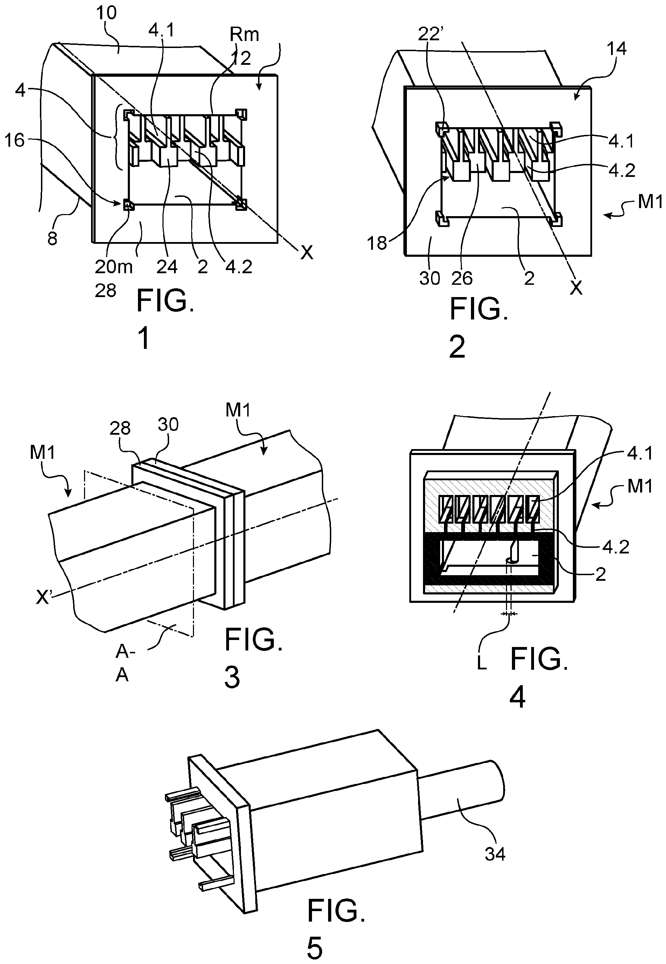

Sur les figures 1, 2 et 3, on peut voir un exemple de module élémentaire plus particulièrement adapté à la réalisation d'un module de la zone adiabatique. Le module M1 s'étend selon l'axe longitudinal X.

Sur la figure 3, on peut voir une vue en coupe du module M1 de section rectangulaire comportant un premier canal de grande section 2 formant le canal vapeur dans lequel circule la vapeur de la zone d'évaporation vers la zone de condensation et des canaux 4.1, dits canaux liquides, de plus petite section dans lesquels le liquide circule du condenseur vers l'évaporateur. Les canaux liquides 4.1 sont connectés fluidiquement au canal vapeur par des canaux de liaison 4.2, l'ensemble canal liquide 4.1 et canal de liaison 4.2 forme une rainure réentrante 4. La largeur L du canal de liaison 4.2 détermine les performances du caloduc en termes de capacité de transport. Plus la largeur L est faible, plus les performances du caloduc sont bonnes.

Dans cet exemple, le canal vapeur 2 s'étend le long d'une face 8 du module M1, et les canaux 4.2 s'étendent le long d'une face 10 opposée à la face 8 du module M1. En variante, le module comporte des canaux liquides le long des faces 8 et 10 et un canal vapeur entre les deux rangées de canaux liquides et commun à ces deux rangées.

Le canal vapeur et les rainures réentrantes débouchent dans les deux extrémités longitudinales 12, 14 (figure 6).

De manière particulièrement avantageuse, chacune des faces 12, 14 comporte des moyens d'alignement 16, 18 des canaux de liaison des modules adjacents. Il résulte en outre de cette juxtaposition un alignement respectivement du canal vapeur avec le canal vapeur des modules adjacents et de chaque canal liquide avec un canal liquide des modules adjacents.

Dans cet exemple, la section transversale du canal vapeur et la section des rainures réentrantes peuvent être inscrites dans un rectangle R.

Les moyens d'alignement 16 de la face 12 comportent des évidements ou creux 20 aux sommets du rectangle R destinés à coopérer avec des éléments en saillie 22 aux sommets du rectangle sur la face 14 du module adjacent. Les éléments en saillie 22 ont de préférence une dimension dans la direction d'emboîtement relativement faible de l'ordre de quelques millimètres, par exemple 1 mm à 5 mm, afin de limiter la fragilisation de la structure complète du caloduc

En outre, les portions de matériau 24 entre les canaux de liaison 4.2 sont telles que certaines parties sont en saillie de la face 12 et d'autres sont en retrait de la face 12. Les portions 26 sur la face 14 forment une forme en négatif des portions 24 permettant ainsi leur interpénétration. Lors de l'assemblage de deux modules élémentaires adjacents comme représenté sur la figure 6, les sections de canal de liaison sont automatiquement alignées entre elles.

Dans l'exemple représenté et de préférence, les extrémités longitudinales des modules comportent des brides 28, 30 permettant l'assemblage de deux modules l'un avec l'autre.

Plusieurs types d'assemblage sont envisageables et peuvent être combinés. De préférence, l'assemblage peut être réalisé par soudage de brides, par exemple par soudage à l'arc électrique, par soudage à l'arc avec électrode de tungstène ou TIG (Tungsten inert gas en terminologie anglo-saxonne), par soudage MIG-MAG (Metal Inert Gas - Metal Activ Gas en terminologie anglo-saxonne) dans lequel la fusion des métaux est obtenue par l'énergie calorifique dégagée par un arc électrique qui éclate dans une atmosphère de protection entre un fil électrode fusible et les pièces à assembler, par soudage orbital, le soudage par faisceau d'électrons, néanmoins cette technique requiert une enceinte sous vide. De préférence, le soudage est réalisé par soudage plasma qui permet de réaliser des soudures de très bonne qualité et avec une très bonne précision. En outre cette technique permet de souder des pièces très fines, jusqu'à 0,05 mm d'épaisseur par microplasma.

Une autre technique de soudage préférée est le soudage laser. Un cordon de soudure très fin est formé, qui se refroidit très rapidement, ce qui assure une continuité métallique et métallurgique et génère peu de déformation. En outre cette technique ne requiert pas de métal d'apport.

En variante, l'assemblage peut être réalisé par brasage.

En variante, l'assemblage peut être réalisé par bridage, par exemple au moyen d'un collier recouvrant les brides.

En variante, l'assemblage peut être réalisé par collage.

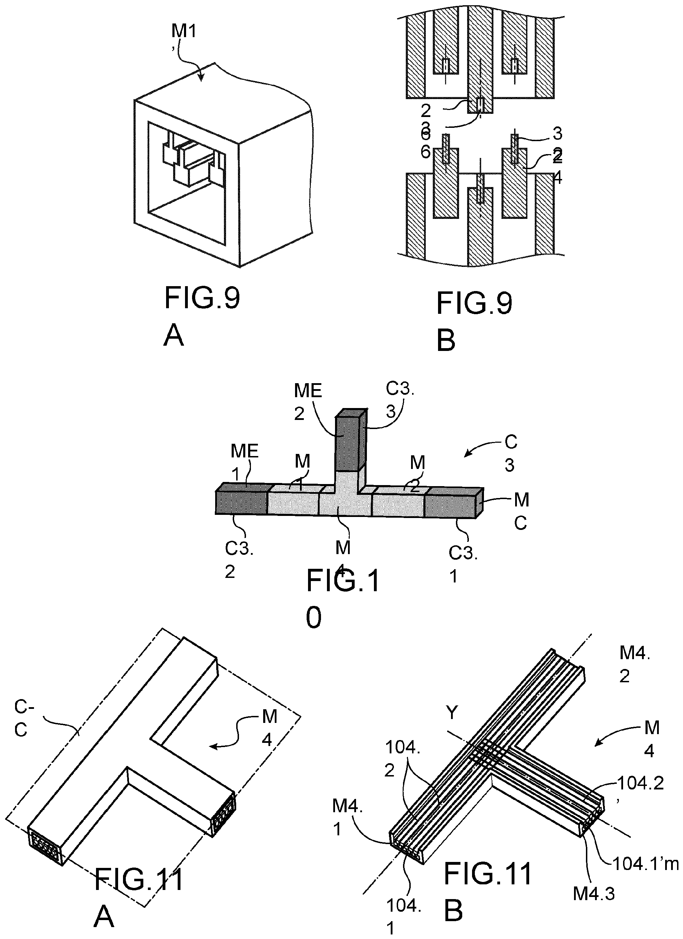

Sur les figures 9A et 9B, un autre exemple de module M1' comportant des moyens d'alignement selon une variante de réalisation est représenté. Dans cet exemple des doigts 32 font saillie axialement des portions de matériaux 24 et des cavités 36 sont réalisées dans les portions de matériau 26 de la face en regard du module adjacent. En outre, les portions de matériau 24 alternent des portions en saillie et en retrait de la face 12 et les portions de matériau 26 alternent en négatif des portions en retrait et en saillie de la face 14.

Dans cet exemple, aucun moyen au niveau des sommets des rectangles R n'est mis en oeuvre. En variante les creux 20 et les éléments en saillie 22 sont également ou uniquement mis en oeuvre.

Il sera compris que tout autre moyen assurant l'alignement des portions de canal de liaison entre elles ne sort pas du cadre de la présente demande.

Sur la figure 5, on peut voir un exemple de module élémentaire M1" spécialement adapté pour former une extrémité d'un caloduc, soit le module évaporateur, soit le module condenseur.

Le module d'extrémité M1"comporte une extrémité configurée pour se connecter et s'aligner avec une extrémité d'un module élémentaire, par exemple le module M1 et une extrémité est munie d'un tube de remplissage 34 du caloduc, qui est obturé après remplissage. Le tube peut être réalisé par méthode additive et donc réalisé d'un seul tenant avec l'ensemble du module ou par un queusot rapporté par exemple par soudage.

L'isolation ou la fermeture étanche du module d'extrémité après remplissage du caloduc peut être obtenue par exemple au moyen d'une vanne montée sur le queusot, un pinçage du queusot, le soudage ou brasage d'un opercule.

Dans cet exemple, les moyens d'alignement sont similaires aux moyens 16.

Les modules MC et ME peuvent être similaires ou identiques au module de la figure 5.

En variante, le module M1 peut être utilisé comme module d'extrémité. Pour cela on peut prévoir de fermer l'extrémité non connectée à un module par exemple par soudage d'un bouchon de forme complémentaire à celle de ladite extrémité, ou alors simultanément à la fabrication des autres éléments du module en réalisant une face d'extrémité plane, ce qui est relativement aisé dans le cas d'un procédé de fabrication additive.

De manière préférentielle, afin de tenir compte des jeux de fabrication et éviter une chute de performances du caloduc, on prévoit de dimensionner les extrémités des modules pour que le contact soit assuré entre les brides et ainsi garantir l'assemblage, par exemple par soudage entre les modules et pour qu'un jeu existe entre les extrémités des sections de canal vapeur et de rainures réentrantes et éventuellement d'autres moyens d'alignement. Le jeu est alors choisi inférieur à la largeur maximale des canaux de liaison, ce qui permet d'éviter de créer un autre canal de liaison entre le canal vapeur et l'un des canaux liquides qui aurait une largeur supérieure à celle des canaux de liaison des modules et qui fixerait les performances du caloduc.

Grâce la réalisation par fabrication additive et par assemblage des modules, des caloducs de forme très variée peuvent être réalisés.

Sur la figure 7, on peut voit un exemple de caloduc C2 présentant deux coudes et permettant par exemple de relier une source chaude et une source froide situées dans deux plans différents.

Le caloduc C2 comporte dans cet ordre un module MC, un module M1, un module M2 comportant deux coudes, un module M1 et un module ME.

Il sera compris que plus d'un module M1 entre le module MC et M2 et/ ou ME et M2 peut être mis en oeuvre et que plusieurs modules M2 peuvent être mis en oeuvre avec des orientations différentes, par exemple pour réaliser un caloduc s'étendant dans les trois dimensions de l'espace. Il sera également compris qu'un caloduc formé par l'assemblage de deux modules d'extrémité ne sort pas du cadre de la présente invention.

Grâce à la fabrication additive, il est possible de réaliser des canaux avec de faibles rayons de courbure, ce qui n'est pas réalisable par cintrage. Ainsi les modules peuvent présenter toute forme, par exemple une forme en U, en S...

Sur la figure 8, on peut voir un exemple de module M3 comportant un seul coude. Dans cette réalisation, les canaux du coude présentent un rayon de courbure supérieur à celui des canaux des coudes du module M2. L'encombrement de deux modules M3 pour réaliser un module similaire à celui du module M2 est plus important que celui de M2.

De préférence et comme cela est représenté sur la figure 8, le canal vapeur 2 et les canaux liquides 4.1 longent les parois latérales planes du coude afin de présenter les mêmes longueurs. En outre, cela permet que le canal vapeur et les canaux liquides soient en contact par des surfaces planes avec les sources chaude et froide respectivement à l'évaporeur et au condenseur.

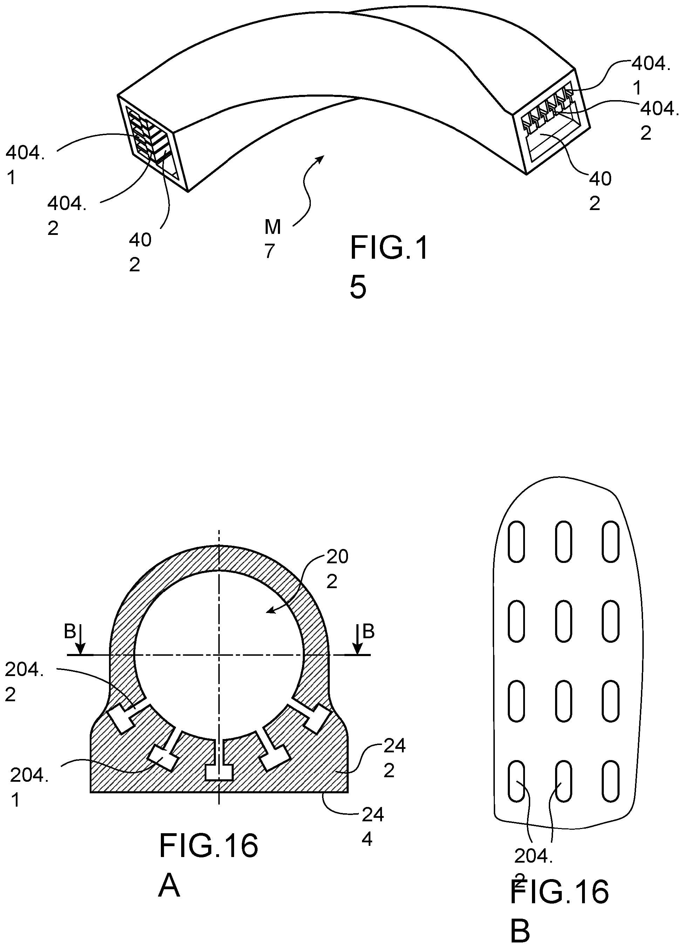

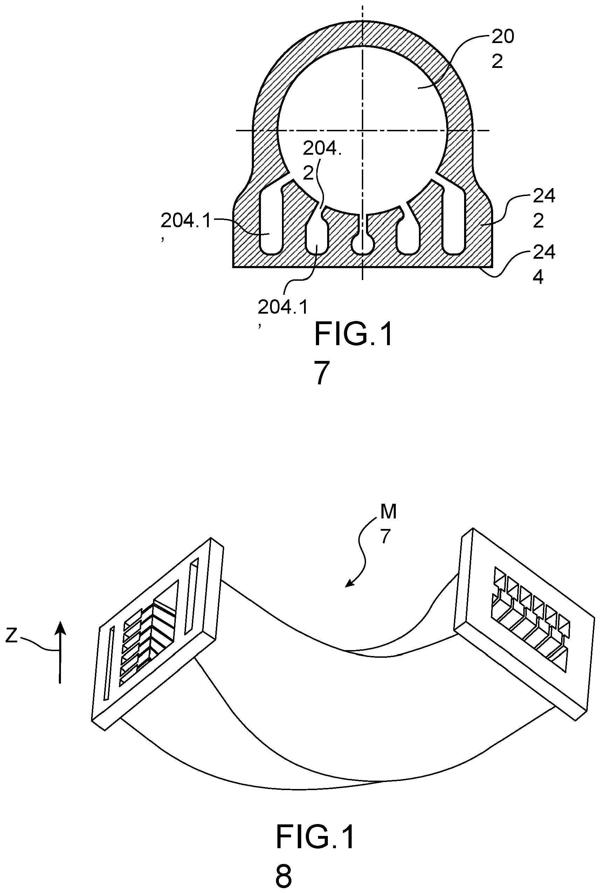

Sur les figures 16A, 16B et 17, on peut voir d'autres exemples de réalisation dans lesquels le canal vapeur présente une section circulaire qui offre une plus grande résistance à la pression qu'une section polygonale.

Le module comporte un canal vapeur 202 de section circulaire reposant sur une base 242 s'étendant sur une section angulaire du canal vapeur vue en coupe. La base 242 porte une face extérieure plane 244 destinée à être en contact avec le flux de chaleur, des canaux liquides 204.1 formés dans la base 242 entre le canal vapeur 202 et la face plane et des canaux de liaison 204.2 entre le canal vapeur 202 et les canaux liquides 204.1 et orientés radialement. Sur la figure 16B, on peut voir une vue en coupe du canal vapeur 202 selon le plan BB et les canaux de liaison 204.2 qui, dans cet exemple, ne s'étendent pas de manière continue mais sont formés par des ouvertures de forme oblongue. Cette réalisation permet d'augmenter la résistance mécanique du module. En variante, les canaux de liaison sont continus sur toute la longueur du module. Dans cet exemple, les canaux liquides ont tous la même section de passage transversale.

La réalisation de canaux de liaison discontinus s'applique également aux modules dont le canal vapeur est de forme polygonale.

Sur la figure 17, on peut voir une variante du caloduc de la figure 16A dans laquelle les canaux liquides 204.1' ont des sections de passage différentes. Les fonds des canaux liquides 204.1' sont tous à la même distance de la face extérieure plane.

Sur la figure 10, on peut voir un autre exemple de caloduc particulièrement avantageux. Le caloduc C3 comporte trois extrémités. Dans cet exemple, il comporte une extrémité C3.1 formant une zone condenseur et deux extrémités C3.2 et C3.3 formant chacune une zone évaporateur. Ainsi avec une seule source froide et un seul caloduc, plusieurs zones distinctes peuvent être refroidies. Inversement l'extrémité C3.1 forme une zone évaporateur et les deux extrémités C3.2 et C3.3 forment chacune une zone condenseur.

Le caloduc comporte un module en T M4 qui relie deux modules d'extrémité ME1 et ME2 à un module MC via éventuellement des modules M1.

Sur les figures 11A à 11C, on peut voir différentes vues du module M4 selon un exemple de réalisation.

Sur la figure 11B, on peut voir l'intérieur du module M4, plus particulièrement l'agencement des canaux de liaison. Il comporte des canaux de liaison 104.2 et des canaux liquides 104.1 s'étendant selon une première direction X entre des extrémités M4.1 et M4.2 du module M4 et des canaux de liaison 104.2'et des canaux liquides 104.1' s'étendant selon une deuxième direction Y à partir de l'extrémité M4.3. Les canaux liquides 104.1, 104.1' se croisent et les canaux de liaison 104.2, 104.2' se croisent également dans une zone d'intersection, délimitant une structure de plots 38 sensiblement en damier. La zone d'intersection permet de relier l'extrémité M4.1 aux deux extrémités M4.2 et M4.3 et dans le caloduc C3 la zone condenseur aux deux zones évaporateurs.

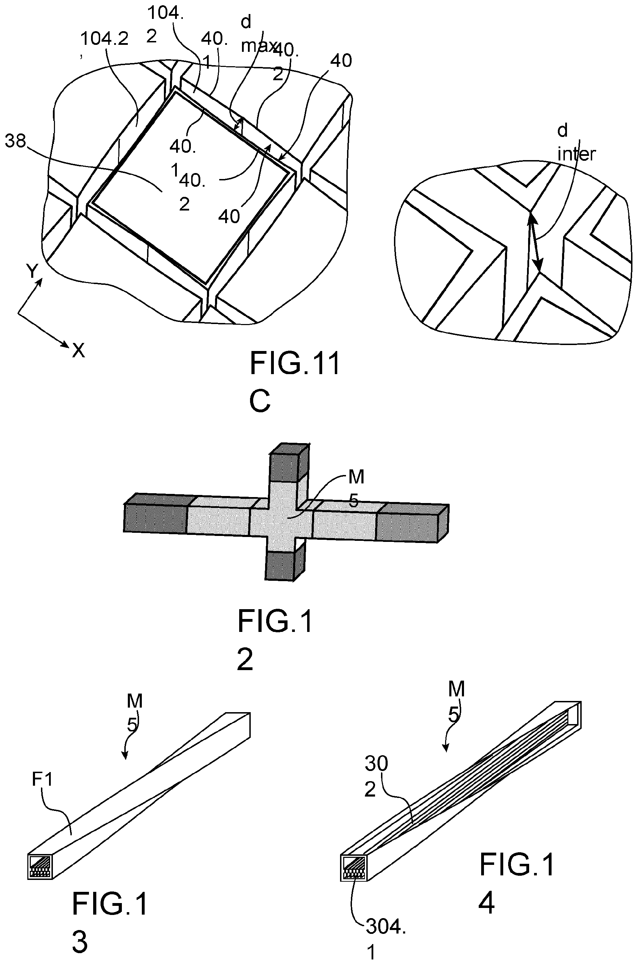

Sur les figures 11B et 11C, on peut voir des vues agrandies de la zone d'intersection des canaux.

De manière particulièrement avantageuse, les canaux de liaison sont structurés pour maîtriser la largeur maximale des canaux de liaison entre la zone condenseur et les zones évaporateurs, ce qui permet de définir les performances du caloduc. En effet c'est la largeur maximale des canaux de liaison qui détermine les performances du caloduc en termes de capacité de transport. Il est donc souhaitable que les canaux de liaison présentent sur toute leur longueur, une largeur inférieure à la largeur maximale décidée lors de la conception du caloduc.

Les inventeurs ont déterminé qu'en donnant un profil spécifique aux canaux de liaison, la largeur de canal de liaison (dinter) à l'intersection des canaux de liaison 104.2 et 104.2' serait inférieure à la largeur maximale dmax de ceux-ci telle que représentées sur la figure 11C.

Au sein de la zone d'intersection, les faces latérales 40 en regard des plots 38 délimitent entre elles un canal de liaison. Les canaux sont configurés pour voir leur largeur se réduire progressivement en se rapprochant des zones d'intersection.

Dans cet exemple, les faces latérales 40 comportent une partie 40.1 dans un plan et une autre partie 40.2 dans un autre plan sécant au premier plan, de sorte que pour deux faces latérales en regard, les deux premières parties s'écartent l'une de l'autre et les deux deuxièmes parties se rapprochent l'une de l'autre, les zones de raccord entre la première et la deuxième parties des deux faces latérales étant distantes de la largeur maximale souhaitée. Ainsi les canaux de liaison dans la zone d'intersection dans la direction X comportent une succession de tronçons, séparés par les intersections, qui vues de dessus, ont une forme de losange. Les canaux de liaison le long de la direction Y ont la même structure. En variante, les faces latérales présentent des profils concaves se rapprochant l'une de l'autre en direction des intersections.

La partie ayant l'ouverture de plus grande largeur peut ne pas être au milieu du canal entre deux zones d'intersection.

Cette structure particulière des canaux de liaison est facilement réalisable par les méthodes de fabrication additive.

La structure de la zone d'intersection des canaux pour le module M5 en croix de la figure 12 est similaire à celle du module M4.

Il sera compris que d'autres formes de canaux sont envisageables afin que la largeur de l'ouverture au niveau des intersections soit inférieure à la largeur maximale déterminée.

Les caloducs des figures 11A-11C et 12 permettant de relier une ou plusieurs sources froides à une ou plusieurs sources chaudes sont particulièrement intéressants par rapport aux structures de caloduc de l'état de la technique permettant de telles connexions. Un réseau de caloducs interconnectés thermiquement et fluidiquement peut être réalisé. Dans les systèmes de l'état de la technique pour connecter par caloducs une ou plusieurs sources froides à une ou plusieurs sources chaudes, plusieurs caloducs distincts comprenant chacune deux extrémités sont mis en oeuvre et sont empilés et connectés les uns ou autres, par soudage ou collage. Or la résistance thermique totale entre un premier caloduc et un deuxième caloduc peut être approximée par la somme des résistances thermiques radiales du premier caloduc, la somme des résistances thermiques radiales du deuxième caloduc et la résistance de contact entre les deux caloducs. Il en résulte une perte d'efficacité très importante.

Or, grâce à l'invention, la résistance thermique est sensiblement réduite par rapport à celle des systèmes de l'état de la technique, puisqu'il s'agit d'un seul caloduc. Seule les résistances thermiques radiales à l'évaporateur et au condenseur sont à prendre en compte.

Il sera compris que des modules d'intersection dans lesquels les canaux de liaison ne se croisent pas à angle droit ne sortent pas du cadre de la présente invention.

En outre les modules, notamment les modules M1 peuvent présenter des longueurs différentes. Dans la présente demande, la longueur du module correspond à la longueur des canaux, par exemple du canal vapeur, le canal vapeur, les canaux liquides et les canaux de liaison ayant sensiblement la même longueur. Par exemple, on peut envisager que la zone adiabatique soit formée par un seul module. Les dimensions extérieures des modules dépendant des dimensions des enceintes de fabrication des machines de fabrication additive.

Dans les exemples décrits sur les figures 1 -4, 5, 8, au moins une des extrémités des modules destinée à se raccorder à un autre module comporte une bride d'assemblage.

En variante, les extrémités destinées à se connecter ne comportent pas de brides et une soudure bout à bout est réalisée entre les modules. Ceci est notamment intéressant lorsque les parois des modules ont une épaisseur suffisante pour ne pas être déformée par une soudure bout-à-bout. Par exemple, les extrémités des modules comportent des formes complémentaires destinées à s'emboîter et à assurer automatiquement l'alignement des canaux de liaisons entre deux modules.

La réalisation par module en fabrication additive permet en outre de réaliser des caloducs permettant de relier une source froide SF et une source chaude SC situées dans des plans sécants, par exemple dans des plans orthogonaux.

Les modules selon l'invention peuvent être conformés pour que la source froide et la source chaude soient en contact avec les faces le long desquelles s'étendent uniquement le canal vapeur ou les canaux liquides.

Pour cela, le module est réalisé de sorte que sa structure soit tournée autour de son axe longitudinal comme s'il avait subi une torsion. Sur les figures 13 et 14, le module M5 tourne de 90° sur sa longueur, la face désignée F1 à une extrémité longitudinale du module est située dans un plan perpendiculaire à la face F1 à une autre extrémité longitudinale. On peut voir le canal vapeur 302, les canaux liquides 304.1 et les canaux de liaison 304.2.

Sur la figure 15 le module M7, en plus de présenter une structure vrillée, présente une courbure de sorte à former un coude. Dans cet exemple, les faces ont également pivoté de 90°. On peut voir le canal vapeur 402, les canaux liquides 404.1 et les canaux de liaison 404.2.

Il sera compris que l'angle de rotation entre la première face et la deuxième face peut être différent de 90°. Cette forme s'applique également aux caloducs des figures 16A et 17.

Le caloduc peut comporter un ou plusieurs modules présentant cette forme vrillée en fonction de l'environnement dans lequel le caloduc est à implanter.

De préférence, la fabrication des modules des figures selon la méthode additive s'effectue selon le sens de la flèche Z sur la figure 18, qui indique le sens dans lequel l'épaisseur du module croît lors de la fabrication.

Le module selon l'invention comporte une, deux, trois, quatre extrémités ouvertes, voire plus, ce qui permet très avantageusement de réaliser des traitements à l'intérieur du module permettant d'améliorer les performances du caloduc, par exemple la conductance à l'évaporateur, au condenseur, de gérer la limite d'ébullition, d'éliminer la poudre résiduelle, de rectifier des dimensions.

Le traitement de surface peut être mécanique, tel que par usinage, par exemple multiaxe grenaillage, sablage, micro polissage, peut être chimique par exemple une anodisation, par circulation d'un liquide dans le module.

Le traitement de surface mécanique peut permettre de respecter les tolérances, notamment en extrémités de modules pour s'assurer que le jeu entre les extrémités des canaux de liaison de deux modules adjacents soit inférieur à la largeur maximale fixée pour le canal de liaison.

Un traitement du module peut être effectué pour en améliorer les propriétés mécaniques, par exemple une compression isostatique à chaud peut être réalisée pour éliminer les microporosités internes subsistantes ou en effectuant une trempe, i.e. en chauffant le module à haute température, puis en le refroidissant rapidement, modifiant sa microstructure, ce qui améliore la ductilité.

Le module peut également subir des traitements pour ajouter une fonctionnalité, par exemple en usinant un alésage, ou pour supprimer des parties sacrificielles ayant par exemple servies de support lors de la fabrication par méthode additive.

En outre la réalisation en module permet de différencier les traitements entre la zone d'évaporation, la zone de condensation et la zone adiabatique.

Les modules sont par exemple réalisés en aluminium, cuivre, nickel, acier inoxydable, ou en alliages de deux ou plusieurs de ces métaux. Le choix du matériau utilisé dépend des conditions de fonctionnement attendues qui fixent notamment la résistance thermique, la compacité et la masse linéaire. Le choix du matériau utilisé dépend également des conditions opératoires, telles que la plage de température, la résistance mécanique. Le choix du matériau dépend également de la compatibilité avec le fluide utilisé dans le caloduc.

Le module selon l'invention peut être réalisé par les différentes méthodes de fabrication additive. Il peut être fabriqué par le procédé de fusion par lit de poudre dans lequel une zone d'une couche de matériau en poudre est fondue dans une zone donnée au moyen d'un faisceau laser ou d'un faisceau d'électrons. Puis une nouvelle couche de matériau en poudre est déposée, qui sera ensuite fondue dans une zone donnée. Ces étapes sont répétées jusqu'à ce que la pièce soit terminée.

Les couches ont une épaisseur comprise par exemple entre 20 µm et 100 µm, et les particules du matériau en poudre ont un diamètre compris par exemple entre 10 µm et 50 µm. Une épaisseur minimale de paroi de l'ordre de 0,4 mm peut être atteinte par ce procédé.

En variante, le module peut être fabriqué par dépôt de matériau et fusion ou DED (Direct Energy Deposition en terminologie anglo-saxonne). Un matériau est apporté sous forme de poudre ou de fil, celui-ci est fondu par une source à haute énergie. Le matériau est déposé sélectivement couche par couche sur un substrat, par exemple guidé par un bras robotisé multi-axes et ensuite fini par un usinage par commande numérique .fondre le matériau. L'énergie thermique est générée soit par laser, soit par un faisceau d'électrons, soit par un gaz ionisé. Le matériau est directement projeté dans la zone chauffée où il fond.

En variante, le module peut être fabriqué par le procédé dit de Jet de liant (Binder Jetting en terminologie anglo-saxonne) dans lequel des liants sont projetés sélectivement sur le lit de poudre, liant ces zones ensemble pour former une partie solide, une couche à la fois. Un post-traitement thermique, par exemple un frittage, a ensuite lieu pour éliminer le liant et créer une pièce entièrement métallique.

En variante, le module peut être fabriqué par extrusion de métal, dans lequel un filament ou une tige constitué d'un polymère et fortement chargé de poudre métallique est extrudé à travers une buse (comme dans le procédé FDM) pour former la partie « verte » qui est post-traitée, par exemple en réalisant une étape d'ébavurage et une étape de frittage, pour créer une pièce entièrement métallique.

En variante encore, le module peut être réalisé par fabrication additive ultrasonique. Pour cela des feuilles métalliques sont collées couche par couche à l'aide d'un soudage par ultrasons, puis formées à la forme souhaitée à l'aide d'un usinage à contrôle numérique.

La pièce est modélisée par CAO, cette modélisation est ensuite utilisée dans la machine de fabrication par méthode additive pour diriger le faisceau laser.

Un exemple de procédé de fabrication d'un caloduc va maintenant être décrit.

Les caractéristiques du caloduc à réaliser sont déterminées, par exemple ses dimensions, sa forme en fonction de l'environnement dans lequel il doit être implanté, le nombre de sources chaudes et de sources froides, leur plan d'intégration.

Le caloduc est ensuite « divisé » en modules : modules d'extrémités, modules d'intersection éventuellement, modules intermédiaires.

Chaque module est modélisé par CAO. Le modèle obtenu sert alors à commander la machine de fabrication additive.

Chaque module est ensuite fabriqué par fabrication additive.

Les modules subissent ensuite éventuellement un ou des traitements de rectification et/ou des traitements pour améliorer leur propriétés mécaniques et/ou vis-à-vis des performances du caloduc. La poudre restant dans les modules est éliminée. Des fonctionnalités peuvent être ajoutées aux modules, par exemple une vanne à au moins une des modules d'extrémité.

Les modules sont ensuite assemblés de manière étanche les uns aux autres de préférence par soudage laser. Avant l'assemblage les extrémités des canaux de liaison sont alignées grâce aux moyens d'alignement.

Le caloduc ainsi formé, préalablement tiré au vide, est rempli du fluide caloporteur par un queusot prévu dans un des modules d'extrémité, qui est ensuite obturé de manière étanche.

Le caloduc est alors prêt à être utilisé.

La réalisation par module selon l'invention présente de nombreux avantages.

La réalisation de caloduc sous forme de module permet de réaliser des caloducs de forme très variée et configurés spécialement pour une application spécifique et un environnement spécifique. Par exemple, il peut être réalisé des caloducs permettant de relier une ou des sources chaudes à une ou des sources froides situées dans des plans différents et/ou de relier une ou plusieurs sources froides à une ou plusieurs sources chaudes, présentant une grande efficacité de transport de flux thermique et donc améliorant sensiblement l'efficacité globale du réseau de caloporteur et permettant un gain de masse.

Lorsqu'un réseau de caloducs est demandé, l'invention permet une réduction de nombre de caloducs, voire de ne réaliser qu'un seul réseau de caloducs interconnectés fluidiquement et thermiquement, réduisant sensiblement les pertes thermiques d'interconnexion des caloducs, et évitant le phénomène de chaîne thermique par ajout du différentiel de température entre la ou les sources chaudes et la ou les sources froides.

Elle permet de réaliser des caloducs avec des ouvertures de canal de liaison de largeur très faible et ainsi d'améliorer les performances du caloduc, par exemple de l'ordre de 50 µm à plusieurs centaines de µm.

Il peut être envisagé de réaliser des caloducs dont les zones évaporateur et condenseur auraient des dimensions différentes, par exemple au niveau de la profondeur des canaux de liaison.

La fabrication par méthode additive permet de réaliser des modules de forme complexe.

La fabrication du caloduc comportant principalement deux étapes :
- Fabrication de modules par méthode additive,
- Assemblage des modules.

Celui-ci peut être avantageusement automatisé.

En outre la fabrication additive peut permettre un gain de matière et un gain sur la masse linéaire des modules.

Les caloducs selon l'invention sont particulièrement adaptés à être communication des satellites.

## Revendications

1. Module élémentaire pour la fabrication d'un caloduc à pompage capillaire à rainures réentrantes, ledit module élémentaire étant configuré pour être assemblé de manière étanche à au moins un autre module élémentaire afin de former un caloduc à pompage capillaire à rainures réentrantes, ledit module comportant un corps réalisé par fabrication additive, ledit corps comprenant au moins deux faces d'extrémité (12, 14), ledit corps comprenant une portion du canal vapeur (2) du caloduc, une portion des canaux liquide (4.1) du caloduc et une portion des canaux de liaison (4.2) reliant la portion du canal vapeur (2) et les portions de canaux liquide (4.1), lesdites portions de canal vapeur (2) et de canaux liquides (4.1) débouchant dans au moins l'une des faces d'extrémité (12, 14), au moins par laquelle ledit module élémentaire est destiné à se raccorder à un autre module élémentaire.

2. Module élémentaire selon la revendication 1, dans lequel la portion de canaux de liaison (4.2) débouche dans ladite face d'extrémité (12, 14) et dans lequel ledit module comporte des moyens d'alignement (16, 18) de la portion de canaux de liaison (4.2) débouchant dans ladite face d'extrémité (12, 14) avec la portion de canaux de liaison de l'autre module.

3. Module élémentaire selon la revendication précédente, dans lequel lesdits moyens d'alignement (16, 18) coopèrent avec des moyens d'alignement portés par une face d'extrémité de l'autre module.

4. Module élémentaire selon la revendication précédente, dans lequel les moyens d'alignement comportent des éléments en saillie ou en retrait de ladite face d'extrémité destinés à coopérer avec des éléments en retrait ou en saillie respectivement de la face d'extrémité de l'autre module.

5. Module élémentaire selon l'une des revendications précédentes, dans lequel ladite face d'extrémité et l'autre face d'extrémité sont dans des plans sécants.

6. Module élémentaire selon l'une des revendications précédentes, dans lequel les portions de canal vapeur (2) et de canaux liquides (4.1) au niveau d'une face d'extrémité s'étendent dans des plans distincts respectivement des plans dans lesquelles s'étendent les portions de canal vapeur (2) et de canaux liquides (4.1) au niveau de l'autre face d'extrémité.

7. Module élémentaire selon l'une des revendications précédentes, dans lequel la portion de canal vapeur a une section circulaire et le module a une section extérieure polygonale ou circulaire.

8. Module élémentaire selon l'une des revendications précédentes, dans lequel le corps du caloduc est en aluminium, cuivre, nickel, acier, ou en alliages de deux ou plusieurs de ces métaux.

9. Module élémentaire selon l'une des revendications précédentes, dans lequel la au moins première face d'extrémité est bordée par une bride d'assemblage.

10. Module élémentaire selon l'une des revendications précédentes, dans lequel les portions de canaux débouchent dans ladite face d'extrémité et dans l'autre face d'extrémité.

11. Module élémentaire selon l'une des revendications 1 à 9, dans lequel les portions de canaux débouchent uniquement dans ladite face d'extrémité, le module étant destiné à former une extrémité du caloduc pour former un condenseur ou un évaporateur.

12. Module élémentaire selon l'une des revendications 1 à 10, dans lequel ledit corps comporte n faces d'extrémité, n étant au moins égal à 3, ledit module étant destiné à être connecté à d'autres modules élémentaires par ses n faces d'extrémité, dans lequel une portion de canal vapeur du caloduc, une portion des canaux liquide du caloduc et une portion des canaux de liaison débouchent dans chacune des n faces d'extrémité.

13. Module élémentaire selon la revendication 12, dans lequel le corps comporte une zone d'intersection des canaux à l'intersection des portions de canaux vapeur, des portions des canaux liquide et des portions des canaux de liaison et dans lequel les portions de canaux de liaison sont conformés de sorte que la largeur à l'intersection de deux portions de canaux de liaisons soit inférieure ou égale à la largeur d'une portion de canal de liaison

14. Caloduc comportant deux modules élémentaires selon la revendication 11 et p modules élémentaires selon l'une des revendications 1 à 10 et 12 et 13, p étant un entier supérieur ou égal à 0, un lesdits modules étant connectés les uns aux autres par soudage, ledit caloduc étant rempli d'un fluide.

15. Caloduc selon la revendication 14, comportant un ou plusieurs modules formant condenseur et un ou plusieurs modules formant évaporateur.

16. Procédé de fabrication d'un caloduc selon la revendication 14 ou 15, comportant :
- la fabrication par méthode additive des modules élémentaires selon la revendication 11,
- la fabrication par méthode additive des p modules élémentaires selon l'une des revendications 1 à 10 et 12 et 13,
- l'assemblage des modules,
- le remplissage du caloduc,
- la fermeture étanche du caloduc.

17. Procédé de fabrication selon la revendication précédente, dans lequel la fabrication additive est réalisée par fusion additive sur lit de poudre au moyen d'un faisceau laser.

18. Procédé de fabrication selon la revendication 16 ou 17, comportant une ou plusieurs étapes de traitement de surface préalables à l'assemblage des modules élémentaires.

19. Procédé de fabrication selon l'une des revendications 16 à 18 en combinaison avec la revendication 9, dans lequel lors de la fabrication les dimensions des modules élémentaires sont telles que ce sont les brides d'assemblage qui entrent en contact et un jeu est prévu entre les extrémités des portions de canaux vapeurs, des extrémités des portions de canaux liquides et des portions de canaux de liaison, ce jeu étant inférieur à la largeur de canal de liaison fixée lors de la conception du caloduc.

## Patentansprüche

1. Elementarmodul für das Herstellen eines Wärmerohrs mit Kapillarpumpe mit Wiedereintrittsnuten, wobei das Elementarmodul dazu konfiguriert ist, in abgedichteter Weise mit mindestens einem anderen Elementarmodul zusammengefügt zu werden, um ein Wärmerohr mit Kapillarpumpe mit Wiedereintrittsnuten zu bilden, wobei das Modul einen Körper aufweist, der durch additive Fertigung hergestellt wird, wobei der Körper mindestens zwei Endflächen (12, 14) umfasst, wobei der Körper einen Abschnitt des Dampfkanals (2) des Wärmerohrs, einen Abschnitt der Flüssigkeitskanäle (4.1) des Wärmerohrs und einen Abschnitt der Verbindungskanäle (4.2), der den Abschnitt des Dampfkanals (2) und die Abschnitte der Flüssigkeitskanäle (4.1) verbindet, umfasst, wobei die Abschnitte des Dampfkanals (2) und der Flüssigkeitskanäle (4.1) in mindestens einer der Endflächen (12, 14) münden, durch die zumindest das Elementarmodul dazu vorgesehen ist, mit einem anderen Elementarmodul verbunden zu werden.

2. Elementarmodul nach Anspruch 1, wobei der Abschnitt der Verbindungskanäle (4.2) in die Endfläche (12, 14) mündet und wobei das Modul Ausrichtungsmittel (16, 18) des Abschnitts der Verbindungskanäle (4.2) aufweist, die in die Endfläche (12, 14) mit dem Abschnitt der Verbindungskanäle des anderen Moduls münden.

3. Elementarmodul nach dem vorhergehenden Anspruch, wobei die Ausrichtungsmittel (16, 18) mit Ausrichtungsmitteln zusammenwirken, die von einer Endfläche des anderen Moduls getragen werden.

4. Elementarmodul nach dem vorhergehenden Anspruch, wobei die Ausrichtungsmittel Elemente aufweisen, die von der Endfläche hervorstehen oder zurückversetzt sind und dazu vorgesehen sind, mit Elementen zusammenzuwirken, die von der Endfläche des anderen Moduls zurückversetzt sind bzw. hervorstehen.

5. Elementarmodul nach einem der vorhergehenden Ansprüche, wobei die Endfläche und die andere Endfläche in sich schneidenden Ebenen liegen.

6. Elementarmodul nach einem der vorhergehenden Ansprüche, wobei die Abschnitte des Dampfkanals (2) und Flüssigkeitskanäle (4.1) sich auf Höhe einer Endfläche in unterschiedlichen Ebenen jeweils von den Ebenen erstrecken, in denen sich die Abschnitte des Dampfkanals (2) und der Flüssigkeitskanäle (4.1) auf Höhe der anderen Endfläche erstrecken.

7. Elementarmodul nach einem der vorhergehenden Ansprüche, wobei der Abschnitt des Dampfkanals einen kreisförmigen Querschnitt hat und das Modul einen polygonalen oder kreisförmigen Außenquerschnitt hat.

8. Elementarmodul nach einem der vorhergehenden Ansprüche, wobei der Körper des Wärmerohrs aus Aluminium, Kupfer, Nickel, Stahl oder Legierungen aus zwei oder mehreren dieser Metalle ist.

9. Elementarmodul nach einem der vorhergehenden Ansprüche, wobei die mindestens erste Endfläche durch einen Verbindungsflansch begrenzt ist.

10. Elementarmodul nach einem der vorhergehenden Ansprüche, wobei die Kanalabschnitte in die Endfläche und in die andere Endfläche münden.

11. Elementarmodul nach einem der Ansprüche 1 bis 9, wobei die Kanalabschnitte nur in die Endfläche münden, wobei das Modul dazu vorgesehen ist, ein Ende des Wärmerohrs zu bilden, um einen Kondensator oder einen Verdampfer zu bilden.

12. Elementarmodul nach einem der Ansprüche 1 bis 10, wobei der Körper n Endflächen aufweist, wobei n mindestens gleich 3 ist, wobei das Modul dazu vorgesehen ist, durch seine n Endflächen mit anderen Elementarmodulen verbunden zu werden, wobei ein Abschnitt des Dampfkanals des Wärmerohrs, ein Abschnitt der Flüssigkeitskanäle des Wärmerohrs und ein Abschnitt der Verbindungskanäle in jede der n Endflächen münden.

13. Elementarmodul nach Anspruch 12, wobei der Körper einen Kreuzungsbereich der Kanäle an der Kreuzung der Abschnitte der Dampfkanäle, der Abschnitte der Flüssigkeitskanäle und der Abschnitte der Verbindungskanäle aufweist und wobei die Abschnitte der Verbindungskanäle so geformt sind, dass die Breite an der Kreuzung zweier Abschnitte der Verbindungskanäle kleiner oder gleich der Breite eines Abschnitts des Verbindungskanals ist.

14. Wärmerohr, das zwei Elementarmodule nach Anspruch 11 und p Elementarmodule nach einem der Ansprüche 1 bis 10 und 12 und 13 aufweist, wobei p eine ganze Zahl größer oder gleich 0 ist, wobei die Module durch Schweißen miteinander verbunden sind, wobei das Wärmerohr mit einer Flüssigkeit gefüllt ist.

15. Wärmerohr nach Anspruch 14, das ein oder mehrere Module, die einen Kondensator bilden, und ein oder mehrere Module, die einen Verdampfer bilden, aufweist.

16. Verfahren zum Herstellen eines Wärmerohrs nach Anspruch 14 oder 15, das Folgendes umfasst:
- Herstellen der Elementarmodule nach Anspruch 11 durch ein additives Verfahren,
- Herstellen der p Elementarmodule nach einem der Ansprüche 1 bis 10 und 12 und 13 durch ein additives Verfahren,
- Zusammenfügen der Module,
- Befüllen des Wärmerohrs,
- abdichtendes Verschließen des Wärmerohrs.

17. Herstellungsverfahren nach dem vorhergehenden Anspruch, wobei dem die additive Fertigung durch additives Schmelzen auf einem Pulverbett mithilfe eines Laserstrahls erfolgt.

18. Herstellungsverfahren nach Anspruch 16 oder 17, das einen oder mehrere Schritte des Behandelns der Oberfläche vor dem Zusammenfügen der Elementarmodule umfasst.

19. Herstellungsverfahren nach einem der Ansprüche 16 bis 18 in Verbindung mit Anspruch 9, wobei beim Herstellen die Abmessungen der Elementarmodule so sind, dass es die Verbindungsflansche sind, die in Kontakt kommen, und ein Spielraum zwischen den Enden der Abschnitte der Dampfkanäle, den Enden der Abschnitte der Flüssigkeitskanäle und den Abschnitten der Verbindungskanäle vorgesehen ist, wobei dieser Spielraum kleiner als die Breite des Verbindungskanals ist, die bei der Konstruktion des Wärmerohrs festgelegt wurde.

## Claims

1. Basic module for manufacturing a heat pipe with a capillary pump with reentrant grooves, said basic module being designed to be assembled in a sealed manner with at least one other basic module in order to form a heat pipe with a capillary pump with reentrant grooves, said module including a body made by additive manufacturing, said body comprising at least two end faces (12, 14), said body comprising a portion of the vapour channel (2) of the heat pipe, a portion of the liquid channels (4.1) of the heat pipe and a portion of the connecting channels (4.2) connecting the portion of the vapour channel (2) and the portions of liquid channels (4.1), said portions of vapour channel (2) and of liquid channels (4.1) opening into at least one of the end faces (12, 14), at least via which said basic module is intended to be connected to another basic module.

2. Basic module according to Claim 1, wherein the portion of connecting channels (4.2) opens into said end face (12, 14) and wherein said module includes means (16, 18) for aligning the portion of connecting channels (4.2) opening into said end face (12, 14) with the portion of connecting channels of the other module.

3. Basic module according to the preceding claim, wherein said alignment means (16, 18) interact with alignment means supported by an end face of the other module.

4. Basic module according to the preceding claim, wherein the alignment means include elements protruding or set back from said end face intended to interact with elements set back or protruding respectively from the end face of the other module.

5. Basic module according to one of the preceding claims, wherein said end face and the other end face are in intersecting planes.

6. Basic module according to one of the preceding claims, wherein the portions of vapour channel (2) and of liquid channels (4.1) at one end face extend in planes respectively different from the planes in which the portions of vapour channel (2) and of liquid channels (4.1) at the other end face extend.

7. Basic module according to one of the preceding claims, wherein the portion of vapour channel has a circular cross-section and the module has a polygonal or circular external cross-section.

8. Basic module according to one of the preceding claims, wherein the body of the heat pipe is made of aluminium, copper, nickel, steel, or alloys of two or more of these metals.

9. Basic module according to one of the preceding claims, wherein the at least first end face is bordered by an assembly flange.

10. Basic module according to one of the preceding claims, wherein the channel portions open into said end face and into the other end face.

11. Basic module according to one of Claims 1 to 9, wherein the channel portions only open into said end face, the module being intended to form one end of the heat pipe to form a condenser or evaporator.

12. Basic module according to one of Claims 1 to 10, wherein said body includes n end faces, n being at least equal to 3, said module being intended to be connected to other basic modules by its n end faces, wherein a portion of vapour channel of the heat pipe, a portion of the liquid channels of the heat pipe and a portion of the connecting channels open into each of the n end faces.

13. Basic module according to Claim 12, wherein the body includes a zone of intersection of the channels at the intersection of the portions of vapour channels, portions of the liquid channels and portions of the connecting channels and wherein the portions of connecting channels are shaped such that the width at the intersection of two portions of connecting channels is less than or equal to the width of one portion of connecting channel.

14. Heat pipe including two basic modules according to Claim 11 and p basic modules according to one of Claims 1 to 10 and 12 and 13, p being an integer greater than or equal to 0, one of said modules being connected to each other by welding, said heat pipe being filled with a fluid.

15. Heat pipe according to Claim 14, including one or more modules forming a condenser and one or more modules forming an evaporator.

16. Method for manufacturing a heat pipe according to Claim 14 or 15, including:
- additive manufacturing of basic modules according to Claim 11,
- additive manufacturing of p basic modules according to one of Claims 1 to 10 and 12 and 13,
- assembling the modules,
- filling the heat pipe,
- sealing the heat pipe.

17. Manufacturing method according to the preceding claim, wherein the additive manufacturing is carried out by additive fusion on a bed of powder by means of a laser beam.

18. Manufacturing method according to Claim 16 or 17, including one or more surface treatment steps prior to assembly of the basic modules.

19. Manufacturing method according to one of Claims 16 to 18 combined with Claim 9, wherein during manufacturing, the dimensions of the basic modules are such that it is the assembly flanges that come into contact and a clearance is provided between the ends of the portions of vapour channels, ends of the portions of liquid channels and portions of connecting channels, this clearance being less than the connecting channel width established when the heat pipe is designed.
